# EUROPEAN PATENT APPLICATION

(11) **EP 1 128 662 A1**
(43) Date of publication of application: **29.08.2001**
(21) Application number: 01103351.1
(22) Date of filing: 13.02.2001
(51) Int. Cl.: H04N 3/15

(54) **Active pixel sensor with photo diode discharge**

(30) Priority: 22.02.2000 US 510229
(71) Applicant: Agilent Technologies Inc. a Delaware Corporation, Palo Alto, CA 94303 (US)
(72) Inventor: Singh, Kalwant, Mountain View, California 94043 (US); Lewison, Richard S., Morrisville, North Carolina 27560 (US)
(74) Representative: Schoppe, Fritz, Dipl.-Ing.

(57) **Abstract**

A pixel cell (30,40) and an active pixel sensor (20) that incorporates that pixel cell. Various embodiments of discharge circuitry (36,44) are disclosed and these embodiments achieve a discharging of the photo diode (31,41) of each pixel cell. In one embodiment, a discharge transistor (36) in coupled to the output node of the photo diode to achieve selectable discharge. In another embodiment, the voltage supply to the photo diode may be switchable coupled between a high level and a low level reference voltage.

## Description

### FIELD OF THE INVENTION

The present invention relates to active pixel sensors and, more specifically, to the removal of image artifacts associated with incomplete or inconsistent pixel reset in such sensors.

### BACKGROUND OF THE INVENTION

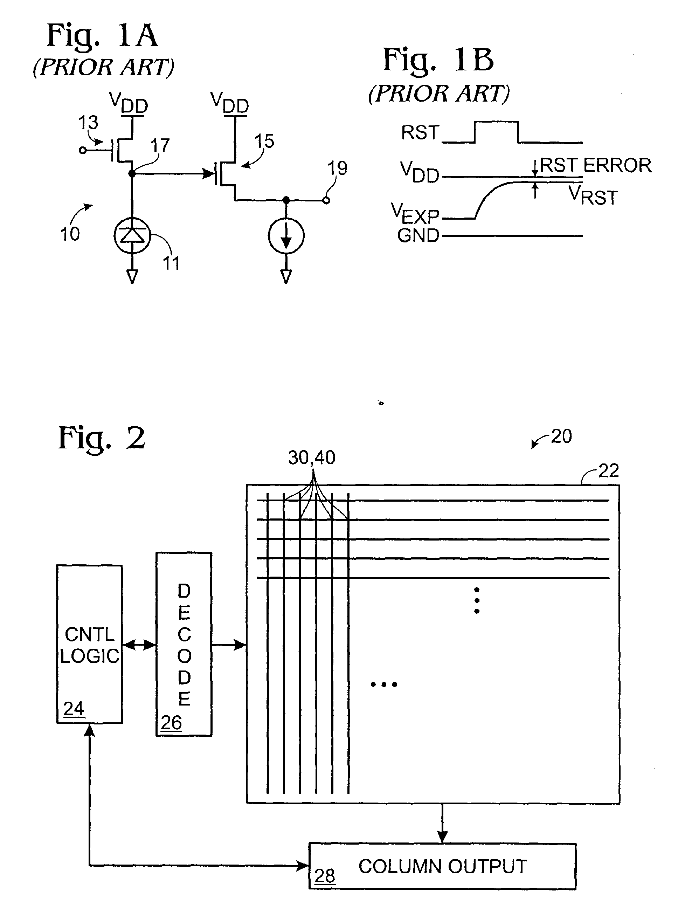

Referring to Figs. 1A-1B, a representative prior art pixel cell (hereinafter referred to as a "pixel") 10 and a timing diagram therefor are respectively shown. Pixel 10 includes a photo diode 11, a reset transistor 13, a read transistor 15, a photo diode output node 17 and pixel output node 19, amongst other components. A typical active pixel sensor (APS) is formed of a plurality of such pixels arranged in an array and having necessary control logic.

Before exposure, the photo diode of pixel 10 (and of all other pixels in an array) is reset by a reset signal, RST, i.e., charged to a reset voltage, V_{RST}, that approaches V_{DD}. During exposure, the photo diode 11 discharges to a voltage level, V_{EXP}, that will vary with the amount of incident light. The difference between the V_{RST} and V_{EXP} is thus representative of the amount of incident light on a particular pixel during an exposure time period and is used to generate a resultant image.

After exposure, a reset signal is propagated to the reset transistor 13 which recharges the photo diode from V_{EXP} towards V_{RST} (shown in Fig. 1B). The actual V_{RST} of each pixel will typically differ, however, based on the V_{EXP} from which the pixel is charged. For example, a photo diode with a low V_{EXP} (i.e., one that was exposed to more incident light) will not charge to the same V_{RST} as a photo diode with a high V_{EXP}. This results in artifacts or ghost images in the resultant output image signal.

The failure to obtain a constant or consistent reset value occurs in part because reset transistor 13 is a MOS transistor that enters the subthreshold region as the photo diode voltage approaches V_{DD}. In this region, the conduction of the MOS transistor wanes and becomes exponential (to a first order). This results in the photo diode never reaching V_{DD}, but slowly converging towards it. With a fixed duration reset signal, pixels charge to different levels based on their respective V_{EXP} at the time charging began. As alluded to above, this in turn results in different final V_{RST} levels at the plurality of photo diodes and the appearance of "ghosting" or "capacitive image light" and the resultant image.

A need thus exists for an APS that minimizes or reduces the presence of artifacts in the resultant image. A need also exists for an APS that reduces these artifacts by providing a consistent reset voltage.

### SUMMARY OF THE INVENTION

Accordingly, it is an object of the present invention to provide an APS that reduces or eliminates artifacts in resultant images.

It is another object of the present invention to provide an APS that achieves a consistent reset level for substantially all pixels.

It is also an object of the present invention to provide such an APS that provides these benefits in an efficient and economical manner.

These and related objects of the present invention are achieved by use of an active pixel sensor with photo diode discharge as described herein.
In one embodiment, the present invention includes a pixel cell, having a photo diode having an output node, a reset transistor coupled to the photo diode, and a selectably enableable discharging circuit coupled to the photo diode that selectably discharges the photo diode to a low level reference voltage. The discharge circuit may include a gatable connection between the photo diode and the low level reference voltage. Alternatively, the discharge circuit may include a supply voltage to the photo diode that is switchable between a high level reference voltage and the low level reference voltage.

In another embodiment, the present invention includes an active pixel sensor circuit having a plurality of pixel cells each having a photo diode, control logic that propagates a reset signal to the photo diode of each pixel cell, and a discharge circuit coupled to each of the photo diodes for selectably discharging the photo diode. The discharge circuit preferably discharges the photo diodes prior to issuance of a reset signal by the control logic. The present invention also includes an active pixel sensor circuit having pixel cells that each contain a photo diode discharge circuit.

The attainment of the foregoing and related advantages and features of the invention should be more readily apparent to those skilled in the art, after review of the following more detailed description of the invention taken together with the drawings.

### BRIEF DESCRIPTION OF THE DRAWINGS

Figs. 1A-1B is a schematic diagram of a representative prior art pixel cell and a timing diagram therefor.

Fig. 2 is a schematic diagram of an active pixel sensor in accordance with the present invention.

Figs. 3A-3B is a schematic diagram of a pixel with photo diode discharge and a timing diagram therefor in accordance with the present invention.

Figs. 4A-4B is a schematic diagram of an alternative embodiment of a pixel with photo diode discharge and a timing diagram therefor in accordance with the present invention.

### DETAILED DESCRIPTION

Referring to Fig. 2, a schematic diagram of an APS in accordance with the present invention is shown. APS 20 includes an active pixel array 22 (with a plurality of pixels 30,40, one at each row and column intersection), control logic 24, row decode logic 26 and column output processing logic 28. Control logic 24 produces row select and reset signals (and "discharge signals" as discussed below). Column output processing logic 28 includes column amplifiers, a row buffer and other known circuitry for processing array output signals. Suitable decode and column output processing logic is known in the art. Suitable control logic is also known, albeit without the provision of photo diode discharge and related aspects that are taught herein.

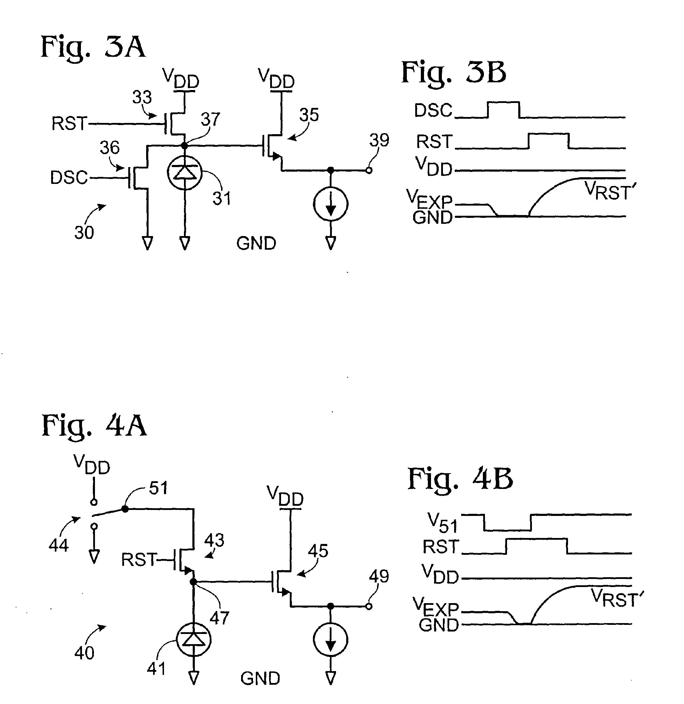

Referring to Figs. 3A-3B, a schematic diagram of a first embodiment of a pixel 30 with photo diode discharging, and a timing diagram therefor, in accordance with the present invention are respectively shown. Pixel cell 30 includes a photo diode 31, reset transistor 33, a read transistor 35, a photo diode output node 37 and a pixel output node 39. Pixel 30 also includes a discharge transistor 36 that discharges the photo diode after V_{EXP} is read.

Control logic 24 (of Fig. 2) generates a discharge signal, DSC, (shown in Fig. 3B) that causes the voltage on photo diode 31 to discharge to ground (or to another suitable low level reference voltage) before the reset signal, RST (also shown in Fig. 3B), is issued. By permitting the photo diodes to be discharged (after V_{EXP} is read), all of the photo diodes of an array are at the same voltage level, e.g., ground or a chosen reference, before the reset signal is issued. Issuance of the reset signal now causes each of the photo diodes to charge to approximately the same voltage level (indicated as V_{RST}' in Figs. 3B and 4B) because, in large part, the photo diodes are identical and are charged with the same voltage for the same period of time.

This achieves a consistent V_{RST} among pixels in the array and hence the removal of V_{EXP} dependent artifacts from the resultant image.

Referring to Figs. 4A-4B, a schematic diagram of an alternative embodiment of a pixel 40 with photo diode discharging, and a timing diagram therefor, in accordance with the present invention are respectively shown. Similar to pixels 10 and 30, pixel 40 includes a photo diode 41, a reset transistor 43, a read transistor 45, a photo diode output node 47 and pixel output node 49. Pixel 40 also includes a MOS transistor switch 44 (represented in functional form in Fig. 4A) that couples a supply node 51 between a high and a low reference voltage, for example, between V_{DD} and ground. Switch 44 may be implemented, for example, as a CMOS inverter with the discharge signal (DSC of Fig. 3B) as the input signal. When switched to ground or the low level reference voltage switch 44 discharges photo diode 41.

Control logic 24 generates the discharge signal that controls switch 44 and has a voltage level that is effectively the complement of the supply node voltage V₅₁ (when switch 44 is implemented as a CMOS inverter). When node 51 is driven low, photo diode 41 discharges through this path causing V_{EXP} to ground. Node 51 is then returned to a high level voltage (V_{DD}) and a reset signal, RST, is generated which pulls the photo diodes (of all pixels in the array) to V_{RST}'.

Similar to the arrangement of Fig. 3A, the arrangement of Fig. 4A also achieves a consistent V_{RST} among the pixels of the array and hence the removal of V_{EXP} dependent artifacts from the resultant image.

Figs. 3A and 4A illustrate two embodiments for achieving photo diode discharge and reset, but the present invention is not limited to these two embodiments. Any design that provides photo diode discharge and a uniform reset voltage is within the present invention. Figs. 3A and 4A represent pixel designs that are readily mass producible in a "cell" format and thus lend themselves to use in APS fabrication.

While the invention has been described in connection with specific embodiments thereof, it will be understood that it is capable of further modification, and this application is intended to cover any variations, uses, or adaptations of the invention following, in general, the principles of the invention and including such departures from the present disclosure as come within known or customary practice in the art to which the invention pertains and as may be applied to the essential features hereinbefore set forth, and as fall within the scope of the invention and the limits of the appended claims.

## Claims

1. A pixel cell (30,40), comprising:
a photo diode (31,41) having an output node (37,47);
a reset circuit (33,43) coupled to said photo diode; and
a selectably enableable discharging circuit (36,44) coupled to said photo diode that selectably discharges said photo diode (31,41) to a given reference voltage.

2. The pixel cell of claim 1, wherein said discharging circuit includes a gatable connection (36) between said photo diode output node and said given reference voltage.

3. The pixel cell of claim 1, wherein said reset circuit (43) includes a reset transistor (43) and said photo diode output node is coupled to said reset transistor, and further wherein a supply to said reset transistor is switchable between a high level reference voltage and said given reference voltage.

4. The pixel cell of claim 3, further comprising a switch (44) provided in the supply to said reset transistor, said switch being switchable between a high level and said given reference voltage, said given reference voltage serving to discharge said photo diode.

5. The pixel cell of claim 1, wherein activation of said reset circuit (33,43) when said discharging circuit is not enabled achieves a charging of said photo diode.

6. The pixel cell of claim 1, wherein said given reference voltage is a low level reference voltage equal approximately to ground.

7. The pixel cell of claim 2, wherein said gatable connection is a MOS transistor (36).

8. The pixel cell of claim 4, wherein said switch is a MOS inverter switch (44).

9. A method of operating an active pixel sensor (APS), comprising the steps of:
providing an APS (20) having a plurality of pixel cells (30,40) that each include a photo diode (31,41), a reset circuit (33,43) and a discharge circuit (36,44);
resetting the photo diode of each pixel cell after exposure; and
discharging the photo diode of each pixel cell before said resetting step.

10. The method of claim 9, wherein said discharging step includes the step of discharging each photo diode to a low level reference voltage.
